(19) Europäisches Patentamt / European Patent Office / Office européen des brevets

(11) **EP 1 514 456 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
*H05B 41/28* *(2006.01)*     *H02M 1/00* *(2007.01)*

(21) Anmeldenummer: 03753407.0

(22) Anmeldetag: **11.09.2003**

(86) Internationale Anmeldenummer:
**PCT/EP2003/010123**

(87) Internationale Veröffentlichungsnummer:
**WO 2004/028218 (01.04.2004 Gazette 2004/14)**

(54) **ELEKTRONISCHES VORSCHALTGERAET MIT LADUNGSPUMPE ZUR AKTIVEN LEISTUNGSFAKTORKORREKTUR**

ELECTRONIC BALLAST WITH A CHARGE PUMP FOR ACTIVE POWER FACTOR CORRECTION

APPAREIL ELECTRONIQUE AUXILIAIRE MUNI D'UNE LAMPE DE CHARGE POUR LA CORRECTION ACTIVE DU FACTEUR DE PUISSANCE

(84) Benannte Vertragsstaaten:
**DE GB**

(30) Priorität: **12.09.2002 DE 10242332**

(43) Veröffentlichungstag der Anmeldung:
**16.03.2005 Patentblatt 2005/11**

(73) Patentinhaber: **TridonicAtco GmbH & Co. KG**
**6850 Dornbirn (AT)**

(72) Erfinder:
  • **FINKE, Jürgen**
    **6971 Hard (AT)**
  • **ZUDRELL-KOCH, Stefan**
    **A-6850 Dornbirn (AT)**
  • **BARTH, Alexander**
    **A-6850 Dornbirn (AT)**

(74) Vertreter: **Rupp, Christian**
**Mitscherlich & Partner**
**Patent- und Rechtsanwälte**
**Sonnenstrasse 33**
**80331 München (DE)**

(56) Entgegenhaltungen:
EP-A- 0 253 224      WO-A-02/47443
WO-A-91/02400      US-A- 4 109 307
US-A- 5 331 534      US-A- 5 412 287
US-A- 5 517 086      US-A- 5 764 496
US-A- 5 994 847      US-A- 6 118 225
US-A1- 2003 107 332      US-B1- 6 316 883

• GYUN CHAE ET AL: "Electronic ballast with modified valley fill and charge pump capacitor for prolonged filaments preheating and power factor correction" POWER ELECTRONICS SPECIALISTS CONFERENCE, 1999. PESC 99. 30TH ANNUAL IEEE CHARLESTON, SC, USA 27 JUNE-1 JULY 1999, PISCATAWAY, NJ, USA, IEEE, US, 27. Juni 1999 (1999-06-27), Seiten 1097-1102, XP010346810 ISBN: 0-7803-5421-4
• BOHME F ET AL: "Charge pump ballasts as a special type of electronic ballast for fluorescent lamps" IEEE, XP010521762

## Beschreibung

Die vorliegende Erfindung bezieht sich allgemein auf Vorschaltgeräte für Gasentladungslampen und insbesondere auf eine als Ladungspumpe dienende Pumpschaltung für ein Elektronisches Vorschaltgerät (EVG) zum hochfrequenten Betrieb einer oder mehrerer in Serie geschalteter Gasentladungslampen.

Der Strom, den ein Vorschaltgerät zum Betrieb von Gasentldungslampen dem Netz entnimmt, muss bestimmten Vorschriften und Normen entsprechen. Ein Beispiel für eine Norm ist dabei der IEC-Standard 1000-3-2. Lampenvorschaltgeräte sind in diesem Standard Betriebsgeräte der Klasse C, für die bestimmte maximal zulässige Grenzwerte für die Oberwellen des Netzstroms gelten. Die Anforderungen an moderne EVGs gehen also dahin, dass der Leistungsfaktor λ, also das Verhältnis von Wirkleistung zu Scheinleistung, im Netz möglichst nahe 1 sein soll.

Unabhängig davon wird unter dem Gesichtspunkt einer langen Lebensdauer der Lampe an den Lampenstrom $i_{LA}$ die Anforderung eines niedrigen Scheitelfaktors (Crestfaktor)

$$k_s := \frac{\hat{I}_{LA}}{I_{LA,eff}} \quad \text{mit} \quad I_{LA,eff} := \sqrt{\frac{1}{T} \cdot \int_0^T i_{LA}^2(t)\, dt}$$

gestellt, wobei

$\hat{I}_{LA}$ [mA]     den betragsmäßigen Maximalwert (Spitzenwert) der Amplitude des Lampenstroms $i_{LA}(t)$ bezeichnet und
$I_{LA,eff}$ [mA]     den Effektivwert des Lampenstroms $i_{LA}(t)$ bezeichnet.

Die vorliegende Erfindung beschäftigt sich indessen primär mit dem Problem der Netzstrom-Oberwellen.

Um die zentrale Idee der vorliegenden Erfindung besser nachvollziehen zu können, soll im Folgenden kurz auf die grundlegenden Techniken, Prinzipien und Probleme einer Auswahl herkömmlicher elektronischer Vorschaltgeräte eingegangen werden.

Eine Art elektronischer Lampenvorschaltgeräte basiert auf dem Einsatz einer als Ladungspumpe fungierenden Pumpschaltung (engl.: "Charge Pump") zur Verringerung der Netzstrom-Oberwellen. Derartige Pumpschaltungen werden in der einschlägigen Literatur auch als Schaltungen mit Energierückführung bezeichnet. Die mit Hilfe einer derartigen Pumpschaltung erzeugte Ausgangsspannung $\underline{U}_a$ ist dabei vom Betrag her üblicherweise größer als die Eingangsspannung $\underline{U}_e$.

Ein weiterer Vorteil der Verwendung von derartigen Pumpschaltungen in EVGs ist, dass kein zusätzliches aktives Schaltelement (Transistor etc.) benötigt wird. Ein oder mehrere Potenzialpunkte des EVG's werden über Pumpkondensatoren mit Potenzialpunkten eines Gleichspannungszwischenkreises verbunden, der sich zwischen dem Ausgangstor des Netzgleichrichters und dem Eingangstor des Wechselrichters befindet. Damit ist ein Energierücktransport in den Gleichspannungszwischenkreis möglich. Die Kondensatoren gleichen den Potenzialunterschied aus, wenn die Netzspannung unter die am Zwischenkreiskondensator abfallende Spannung sinkt. Dabei erfolgt im Idealfall eine Entnahme eines sinusförmigen und zur Netzspannung nicht phasenverschobenen Stromes aus dem Netz.

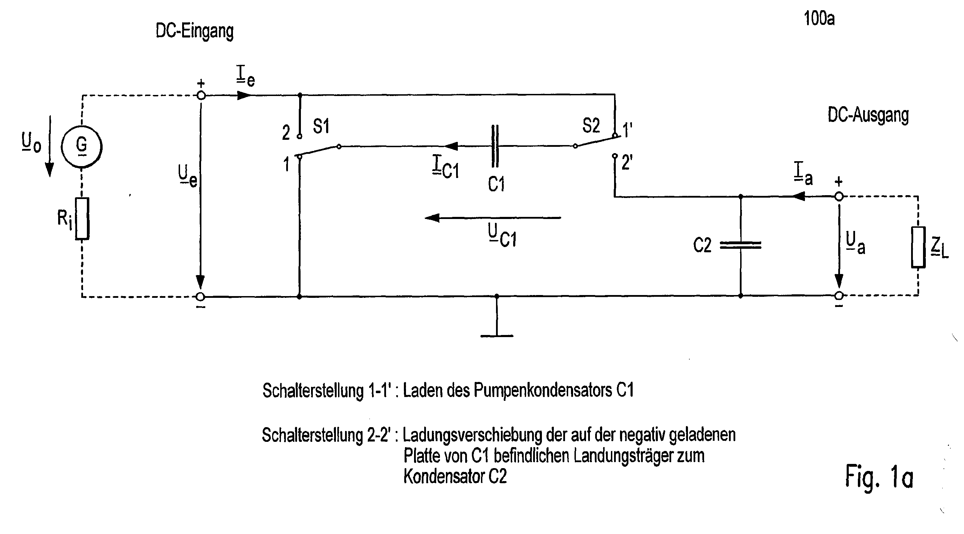

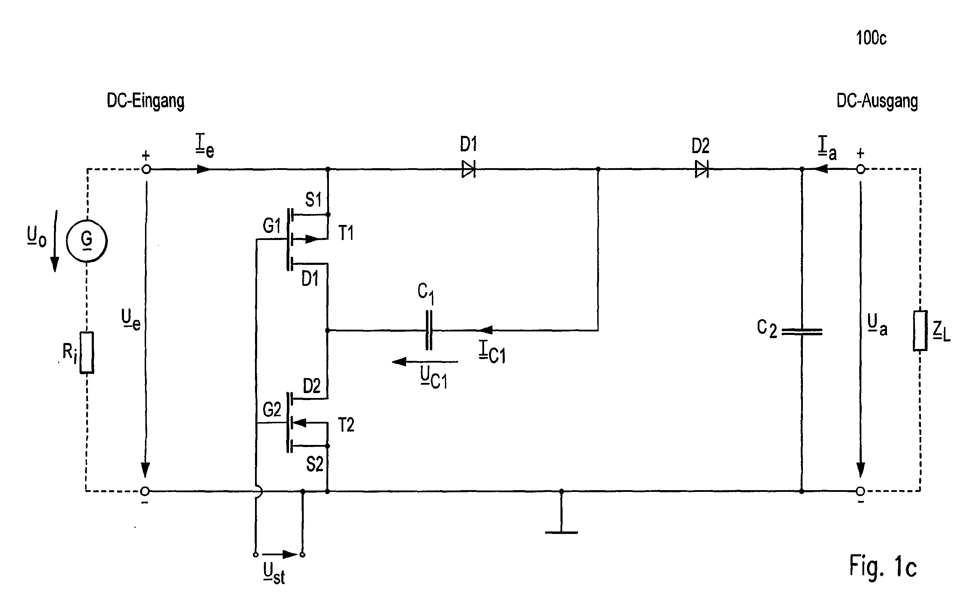

Die Funktion der in Fig. 1a dargestellten Ladungspumpe beruht darauf, die Spannung am Kondensator C2 auf einen Wert über der Eingangsspannung $\underline{U}_e$ zu erhöhen. Dazu wird der Kondensator C1 zuerst geladen und danach seine Ladung in den Kondensator C2 "gepumpt". In der Stellung 1-1' der beiden Umschalter S1 und S2 liegt C1 an der Eingangsspannung $\underline{U}_e$ und wird auf $\underline{U}_e$ geladen, C2 liegt isoliert vom Eingang. Nun werden S1 und S2 in die Stellung 2-2' umgeschaltet. Der negative Anschluss von C1, der vorher an Masse gelegen ist, liegt nun am positiven Anschluss von $\underline{U}_e$, sein positiver Anschluss liegt an C2. In dieser Beschaltung werden vom Eingang positive Ladungen auf die im Bild linke Platte von C1 gebracht. Durch Ladungsverschiebung werden die auf der Gegenelektrode befindlichen Ladungen zu C2 verschoben. Dieser Vorgang wird periodisch wiederholt. Bleibt der Ausgang unbelastet, so stellt sich dort bei gleicher Größe der Kondensatoren C1 und C2 innerhalb einiger Ladezyklen am Ausgangstor der Schaltung eine Ausgangsspannung $\underline{U}_a$ ein, deren Betrag gleich dem der doppelten Eingangsspannung $\underline{U}_e$ ist:

$$\underline{U}_a = 2 \cdot \underline{U}_e.$$

Allgemein gilt:

$$\underline{U}_a = \left( \frac{C_1}{C_2} + 1 \right) \cdot \underline{U}_e \, ,$$

wobei

$\underline{U}_a$      die Ausgangsspannung der Ladungspumpe,
$\underline{U}_e$      die Eingangsspannung der Ladungspumpe,
C1      die Kapazität des Pumpkondensators und
C2      die Kapazität des Ausgangskondensators angibt.

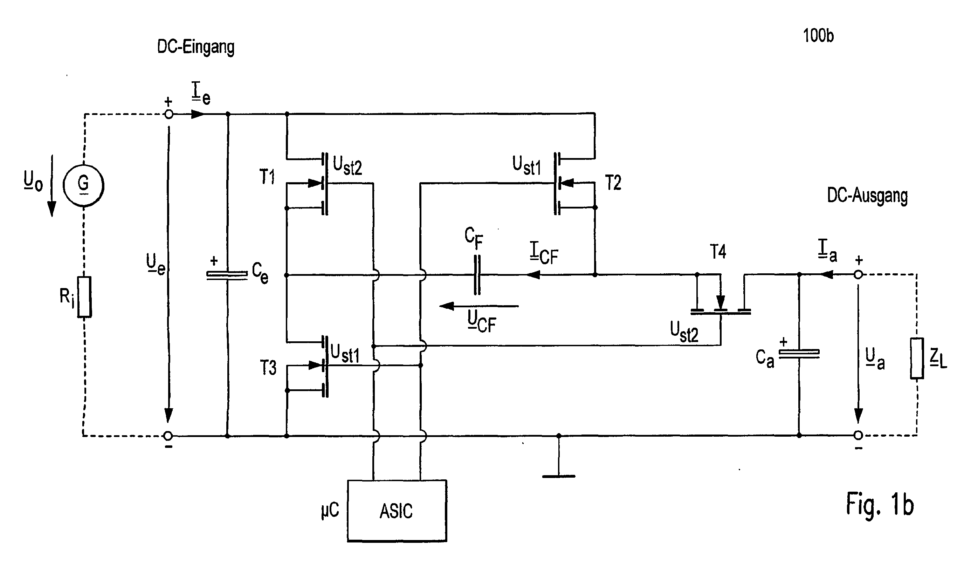

Die in Fig. 1b dargestellte technische Ausführungsform einer konventionellen Ladungspumpe basiert auf einer Abwandlung der in Fig. 1a skizzierten Prinzipschaltung dahingehend, dass die beiden Umschalter S1 und S2 aus Fig. 1a durch die vier Feldeffekttransistoren T1, T2, T3 und T4 ersetzt sind. Zusätzlich wird zur Verringerung der Eingangsimpedanz der Schaltung ein Kondensator $C_e$ zum Eingang parallel geschaltet. Eine Umschaltung zwischen dem Laden von $C_F$ und der Ladungsverschiebung zum Ausgangskondensator $C_a$ wird durch eine getaktete Steuerspannung an den Gates der Leistungstransistoren erreicht. Diese digitalen Steuerspannungen verhalten sich zueinander invers, d.h. bei "High"-Potenzial der einen Spannung liegt die andere Spannung auf "Low"-Potenzial und umgekehrt. Dazu werden T2 und T3 mit der gemeinsamen Spannung $\underline{U}_{st1}$ getaktet, T1 und T4 durch $\underline{U}_{st2}$. Schalten T2 und T3 durch, so wird $C_F$ auf $\underline{U}_e$ geladen (abzüglich der Summe der Drain-Source-Spannungen $\underline{U}_{DS2}$ und $\underline{U}_{DS3}$ von T2 und T3). Nach dem Umschalten der Steuerspannungen sperren T2 und T3, während T1 und T4 durchgeschaltet sind. Der im Ladezyklus über T3 an Masse geschaltete linke Anschluss von $C_F$ liegt dann über T1 an der Eingangsspannung $\underline{U}_e$. Die bisher negativ geladene Platte von $C_F$ wird positiv geladen. Durch Ladungsverschiebung werden die positiven Ladungen von der rechten Platte über T4 auf den Ausgangskondensator $C_a$ verschoben, wodurch sich die an $C_a$ abfallende Ausgangs-spannung $\underline{U}_a$ erhöht.

Für die Anzahl und Anbindung der Pumpkondensatoren gibt es die vielfältigsten Möglichkeiten. Beispielsweise ist in der europäischen Patentschrift EP 0 253 224 B1 eine Schaltungsanordnung zum hochfrequenten Betrieb einer oder mehrerer parallel geschalteter Niederdruckentladungslampen offenbart, die über einen Netzgleichrichter, einen Wechselrichter (Wechselrichter), bestehend aus zwei in einer Halbbrücke angeordneten Bipolartransistoren T1 und T2, einen Serienresonanzkreis sowie über ein Oberwellenfilter zur Reduzierung des Netzstrom-Oberwellengehalts verfügt. Das Oberwellenfilter besteht dabei aus einer Serienschaltung zweier in Vorwärtsrichtung des vom Netzgleichrichter bereitgestellten pulsierenden Gleichstroms gepolter, an dem besagten Netzgleichrichter angeschlossener Dioden D8 und D9, einem Kondensator C7, der den Mittenabgriff M2 zwischen den Dioden D8 und D9 mit dem Mittenabgriff M1 zwischen den Transistoren T1 und T2 des Wechselrichters verbindet sowie einem weiteren Kondensator C8, der den Mittenabgriff M2 mit dem Mittenabgriff M3 zwischen dem Serienresonanzkreis und einer Elektrode der Lampe verbindet. Im Parallelzweig der beiden Dioden sind zwei weitere, in Serie geschaltete Dioden D10 und D11 vorgesehen, deren Mittenabgriff M2 ebenfalls mit dem Mittenabgriff M1 zwischen den beiden Transistoren T1 und T2 des Wechselrichters verbunden ist.

Fig. 1c zeigt eine zweite technische Ausführungsform dieser Ladungspumpe nach dem Stand der Technik mit einem selbstsperrenden p-Kanal-Metalloxid-Feldeffekttransistor T1, einem selbstsperrenden n-Kanal-Metalloxid-Feldeffekttransistor T2 und zwei Dioden D1 und D2, mit der der Betrag der momentanen Eingangsspannung $\underline{U}_e$ nahezu verdoppelt wird. Mit dem aus den beiden Leistungstransistoren T1 und T2 gebildeten Treiber lassen sich dabei auch Spannungsvervielfacher nach Villard ansteuern, mit denen sich hohe Spannungen beider Polaritäten ohne Zuhilfenahme eines Transformators verwirklichen lassen. Durch die Steuerspannung $\underline{U}_{st}$ werden die beiden Transistoren T1 und T2 wechselweise ein- und ausgeschaltet. Nachdem der n-Kanal-Transistor T2 durchgeschaltet worden ist, lädt sich der Pumpkondensator C1 über die Diode D1 auf. Im Anschluss daran sperrt der n-Kanal-Transistor T2, und der p-Kanal-Transistor T1 wird durchgeschaltet. Dadurch wird die am Pumpkondensator C1 abfallende Spannung $\underline{U}_{C1}$ auf die Ein-gangsspannung $\underline{U}_e$ aufgestockt und ein Teil der Ladung von C1 über die Diode D2 in den schon durch die Eingangs-spannung $\underline{U}_e$ aufgeladenen Kondensator C2 gepumpt. Die Ausgangsspannung $\underline{U}_a$ würde dabei nahezu den Betrag der doppelten Eingangsspannung $\underline{U}_e$ erreichen, wenn sie nicht um die Schwellspannungen der beiden Dioden D1 und D2 verringert werden würde.

Eine Invertierung der Eingangsspannung $\underline{U}_e$ erhält man durch das Verlegen der beiden Dioden D1 und D2 in die Rückleitung. Dabei zeigen ihre Kathoden auf die Source-Elektrode des n-Kanal-Transistors T2, und der Knoten zwischen den Dioden D1 und D2 bleibt mit dem Pumpkondensator C1 verbunden. Der Betrag der Ausgangsspannung $\underline{U}_a$ entspricht in diesem Fall der um die beiden Dioden-Schwellspannungen verringerten Eingangsspannung $\underline{U}_e$.

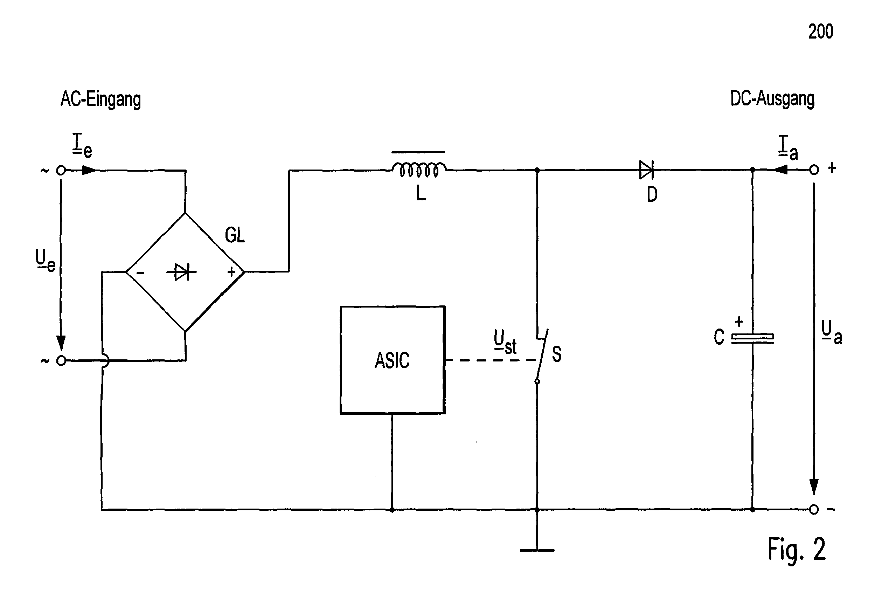

In Fig. 2 ist eine Schaltungstopologie einer als Gleichspannungswandler verwendeten aktiven Leistungsfaktorkorrekturschaltung nach dem Stand der Technik, bestehend aus einem Netzgleichrichter GL, einer mit diesem verbundenen, als Oberwellenfilter wirkenden Speicherdrossel L, einem über einen PFC-Treiber in Form einer anwendungsspezifischen integrierten Schaltung (engl.: "Application-Specific Integrated Circuit", ASIC) gesteuerten Leistungsschalter S, einer Diode D sowie einem ausgangsseitigen Ladekondensator C, dargestellt. Die PFC-Schaltung liefert an ihrem Ausgangstor eine definierte Gleichspannung $\underline{U}_a$, deren Betrag größer ist als der betragsmäßige Spitzenwert der momentanen Wechselspannung $\underline{U}_e$ am Eingangstor der Schaltung. Nach Anlegen der Steuerspannung $\underline{U}_{st}$ an den elektronisch steuerbaren Leistungsschalter S schaltet dieser durch und bewirkt somit ein Aufladen der Speicherdrossel L über den vom Netzgleichrichter GL gelieferten pulsierenden Gleichstrom, bevor die Speicherdrossel L nach dem durch den PFC-Treiber initiierten Sperren des Leistungsschalters S erneut über die Diode D und den Ladekondensator C entladen wird. Obwohl die Schaltung den gesetzlichen Anforderungen an die maximal zulässigen Grenzwerte von Oberwellen genügt, ist die in Fig. 2 vorgestellte Realisierung dieser PFC-Schaltung infolge des verhältnismäßig großen Platzbedarfs der Drosselspule L nicht empfehlenswert.

Zur Erhöhung des Leistungsfaktors λ werden heute im Bereich elektronischer Lampenvorschaltgeräte für Niederdruck-Gasentladungslampen in zunehmendem Maße sogenannte Leistungsfaktor-Korrekturschaltungen (engl.: "Power Factor Correction Circuits", kurz: PFC-Schaltungen) eingesetzt, die eine näherungsweise sinusförmige Stromaufnahme gleicher Phasenlage nach dem IEC-Standard 1000-3-2 zum Betrieb der Schaltung gewährleisten, indem sie die Impedanz im Bereich der Netzfrequenz derart anpassen, dass eine Ohm'sche Last simuliert wird.

Um den Grundgedanken des erfindungsgemäßen Schaltungsprinzips zu verstehen soll nunmehr auf die zentralen Aspekte konventioneller Schaltungstopologien zur Verbesserung des Leistungsfaktors λ eingegangen werden.

Im Gegensatz zu passiven Leistungskorrekturschaltungen, bei denen üblicherweise ein im Netzteil integrierter Transformator eingesetzt wird, der wie ein Tiefpassfilter wirkt und kurzzeitig hohe Stromimpulse im Eingangsbereich unterdrückt, handelt es sich bei einer Schaltung, die nach dem Prinzip der aktiven Leistungsfaktorkorrektur arbeitet, um eine im Netzteil integrierte elektronische Schaltung mit aktiven Schaltelementen, die kurzzeitig hohe Stromimpulse im Eingangsbereich unterdrückt. Derartige aktive PFC-Schaltungen stellen eine im Vergleich zu herkömmlichen passiven PFC-Schaltungen zwar effizientere, aber wesentlich teurere Variante zur Filterung von Oberschwingungsanteilen dar.

In der Offenlegungsschrift DE 196 34 850 A1 wird ein Elektronisches Vorschaltgerät (EVG) für Gasentladungslampen offenbart, das einen an eine Versorgungsspannungsquelle anschließbaren Vollbrücken- bzw. Mehrweggleichrichter, eine mit dem Gleichrichter verbundene Serienschaltung zweier als Steuer- bzw. Rücklaufkondensator wirkender Kapazitäten, eine damit verbundene Serienschaltung zweier steuerbarer Leistungsschalter, die wechselweise schaltbar sind, sowie einen an dem Mittenabgriff zwischen den beiden Leistungsschaltern angeschlossenen Lastkreis mit einem Serienresonanzkreis, bestehend aus einer Resonanzinduktivität, einer Resonanzkapazität sowie einer daran als Lastimpedanz angeschlossenen Gasentladungslampe, aufweist. Darüber hinaus ist ein Transformator vorgesehen, dessen Primärwicklung mit dem Mittenabgriff zwischen Steuer- und Rücklaufkondensator und dessen Sekundärwicklung mit dem Resonanzkondensator verbunden ist. Parallel zur Serienschaltung der beiden Leistungsschalter ist ein Glättungskondensator geschaltet. Zwischen den Gleichrichter und den Rücklaufkondensator kann vorzugsweise eine Drosselspule zur Strombegrenzung geschaltet sein. Außerdem ist zum Betrieb der Schaltung eine Diode erforderlich, deren Anode an die obere Platte des Rücklaufkondensators und deren Kathode an die obere Anschlussklemme des ersten (im Bild oberen) Leistungsschalters angeschlossen ist. Der Steuerkondensator erfüllt dabei zwei Funktionen: Zum einen bestimmt seine Kapazität (neben den Kapazitätswerten der anderen Kondensatoren) zusammen mit der Resonanzinduktivität die Resonanzfrequenz des Serienresonanzkreises; zum anderen wirkt er zusammen mit dem Gleichrichter, dem Rücklaufkondensator und der Drosselspule als Oberwellenfilter, das die Oberwellenrückstrahlung in das Stromversorgungsnetz möglichst gering halten soll. Durch eine geeignete Dimensionierung der Kapazität des Steuerkondensators kann der am Mittenabgriff zwischen Steuer- und Rücklaufkondensator eingespeiste Strom, mit dessen Hilfe der Arbeitspunkt der Schaltungsanordnung verschoben werden kann, beim Zünden oder Vorheizen der Gasentladungslampe möglichst niedrig gehalten werden.

Allgemein ist der sogenannte Lastabwurf ein Problem bekannter EVG-Pumpschaltungen mit Mittenpunktabgriff . Dies bedeutet, das derartige Schaltungen auch dann Energie in den Zwischenkreis "pumpen", wenn bspw. aufgrund einer Störung des Lastkreises (Lampe kaputt, Lampe aus der Fassung genommen etc.) dieser keine Leistung mehr aufnimmt.

WO 91 02400 A zeigt eine Versorgungsschaltung für Konverter, die geringe Oberschwingungen (Harmonic Distortion) aufweist.

Gyun Chae et al: 'Electronic ballast with modified valley fill and charge pump capacitor for prolonged filaments preheating and power factor correction' POWER ELECTRONICS SPECIALISTS CONFERENCE, 1999, PESC 99, 30th ANNUAL IEEE CHARLESTON, SC, USA 27 JUNE-1 JULY 1999, PISCATAWAY, NJ, USA, IEEE, US 27.Juni 1999 (1999-06-27), Seiten 1097-1102, XP010346810 ISBN: 0-7803-5421-4 zeigt eine Ladungspumpe mit gutem Leistungsfaktor (Power Factor PF) und geringen Oberwellen (Harmonic Distortion, THD).

US-A-5 517 086 zeigt ebenfalls eine Ladungspumpe (Valley Fill Circuit) mit gutem Leistungsfaktor (Power Factor).

US-A-5 331 534 zeigt eine Spannungsversorgungsschaltung; die für eine Entladungslampe verwendet werden kann.

Schließlich zeigt US-A-5 994 847 eine Ladungspumpe (Valley Fill) mit Leistungsfaktor-Korrektur (Power Factor Correction, PFC) für ein elektronisches Vorschaltgerät.

AUFGABE DER VORLIEGENDEN ERFINDUNG

Ausgehend von dem oben genannten Stand der Technik, widmet sich die vorliegende Erfindung der Aufgabe, eine Pumpschaltung vorzuschlagen, bei der für den Fall einer Störung des Lastkreises keine Energie mehr in den Zwischenkreis gepumpt wird.

Diese Aufgabe wird erfindungsgemäß durch die Merkmale der unabhängigen Patentansprüche gelöst. Vorteilhafte Ausführungsbeispiele, die den Gedanken der Erfindung weiterbilden, sind in den abhängigen Patentansprüchen definiert.

ZUSAMMENFASSENDE DARSTELLUNG DER VORLIEGENDEN ERFINDUNG

Die Erfindung sieht zur Lösung der Aufgabe ein Vorschaltgerät für wenigstens eine Gasentladungslampe vor, das aufweist:

- einen Netzgleichrichter,
- einen Wechselrichter,
- einen Serienresonanzkreis, bestehend aus der Serienschaltung einer Resonanzkapazität und einer Resonanzinduktivität, und

ein Oberwellenfilter, das eine Reihenschaltung zweier Gleichrichterdioden, die in Vorwärtsrichtung an dem Netz gleichrichter angeschlossen sind, und einen Pumpkondensator aufweist, der mit dem Mittenabgriff der beiden Gleichrichterdioden verbunden ist. Der Pumpkondensator kann dabei bspw. durch einen Übertrager induktiv mit dem durch die Lampe fließenden Strom gespeist werden, um somit eine galvanisch getrennte, (allein) vom Lampenstrom abhängige Pumpenergieversorgung zu schaffen.

Die beiden Gleichrichterdioden des Oberwellenfilters können dabei gleichzeitig Teil des Netzgleichrichters sein.

Weiterhin ist gemäss der Erfindung ein Verfahren zum Betrieb wenigstens einer Gasentladungslampe (LA1) vorgesehen, bei dem die Energie für den Pumpkondensator abhängig von dem über den durch die Lampe fließenden Strom bereitgestellt wird, so dass die Pumpschaltung bei Ausfall des Lampenstroms automatisch abgeschaltet wird. Dies kann bspw. mittels einer induktiven Kopplung erfolgen.

Eine vorteilhafte Weiterbildung der Erfindung besteht ferner darin, die Konzepte einer aktiven und einer passiven Leistungsfaktorkorrektur miteinander zu verbinden. In diesem Zusammenhang wird eine Schaltungsanordnung vorgestellt, die ein Oberwellenfilter gemäß dem Konzept des "Passive Valley Fill" enthält, wobei die Funktion dieses Oberwellenfilters zusätzlich durch eine Ladungspumpe unterstützt wird. Mit einem verhältnismäßig geringen Aufwand kann hierdurch ein besonders hoher Leistungsfaktor erzielt werden, wobei trotzdem die vorgenannten Vorteile gewahrt bleiben.

KURZBESCHREIBUNG DER ZEICHNUNGEN

Weitere Eigenschaften, Merkmale, Vorteile und Zweckmäßigkeiten der zugrunde liegenden Erfindung resultieren aus den untergeordneten abhängigen Patentansprüchen, welche nunmehr, bezugnehmend auf die Figuren der begleitenden Zeichnungen und anhand einer detaillierten Beschreibung eines Ausführungsbeispiels der zugrunde liegenden Erfindung, erläutert werden sollen.

Fig. 1a    zeigt eine bekannte Ladungspumpe (Charge Pump)

Fig. 1b    zeigt eine erste technische Ausführungsform der bekannten Ladungspumpe von Fig. 1a

Fig. 1c    zeigt eine zweite technische Ausführungsform der bekannten Ladungspumpe von Fig. 1a

Fig. 2    zeigt die Schaltungstopologie einer als Gleichspannungswandler verwendeten bekannten aktiven Leistungsfaktorkorrekturschaltung,

Fig. 3a    zeigt eine erste Ausführungsform einer erfindungsgemäßen aktiven Leistungsfaktorkorrekturschaltung,

Fig. 3b    zeigt eine zweite Ausführungsform einer erfindungsgemäßen aktiven Leistungsfaktorkorrekturschaltung mit zwei in Serie geschalteten NiederdruckGasentladungslampen im Lastkreis,

Fig. 4b    zeigt die Schaltungstopologie einer bekannten passiven Leistungsfaktorkorrekturschaltung,

Fig. 5a    zeigt einer dritte Ausführungsform einer erfindungsgemäßen Leistungsfaktorkorrekturschaltung bestehend aus einer Kombination aus einer aktiven und einer passiven Leistungsfaktorkorrekturstufe,

Fig. 5b    zeigt eine erste Variante der in Fig. 5a dargestellten Schaltung,

Fig. 6a    zeigt eine zweite Variante der in Fig. 5a dargestellten Schaltung,

Fig. 6b    zeigt eine dritte Variante der in Fig. 5a dargestellten Schaltung,

Fig. 7a    zeigt eine vierte Ausführungsform einer erfindungsgemäßen Leistungsfaktorkorrekturschaltung bestehend aus einer passiven Leistungsfaktorkorrekturschaltung, die von einer Ladungspumpe unterstützt ist, und

Fig. 7b    zeigt eine Variante der in Fig. 7a dargestellten Schaltung.

## DETAILLIERTE BESCHREIBUNG DER ERFINDUNG

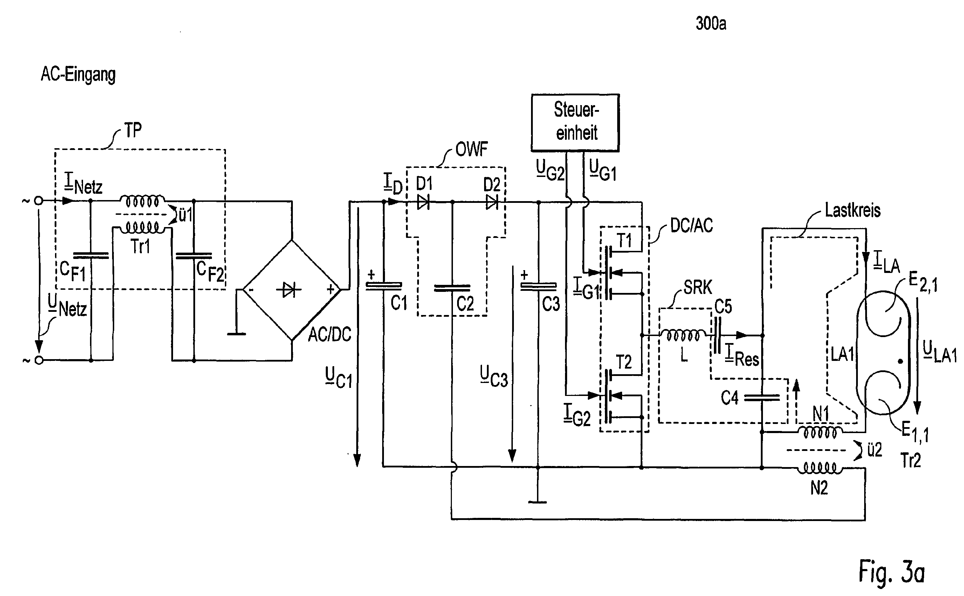

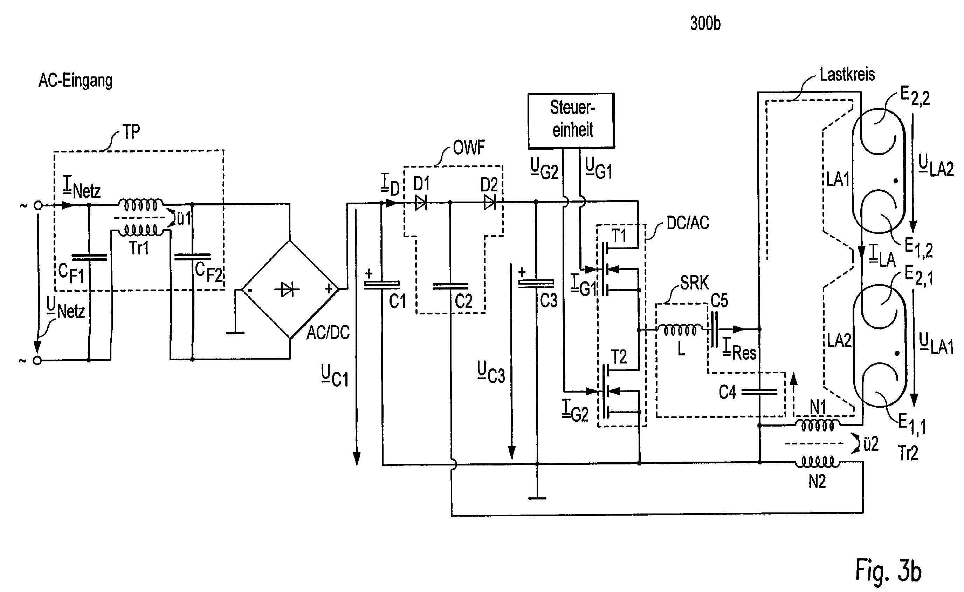

Im Folgenden werden die Funktionen der in zwei Ausführungsbeispielen der erfindungsgemäßen aktiven PFC-Schaltung eines Elektronischen Vorschaltgeräts (EVGs) für Niederdruck-Gasentladungslampen enthaltenen Bauelemente, wie in den Figuren 3a und 3b abgebildet, näher beschrieben.

Die in Fig. 3a abgebildete erste Ausführungsform der erfindungsgemäßen aktiven PFC-Schaltung 300a verfügt über einen als Gleichrichter-Vollbrücke bzw. Mehrweggleichrichter realisierten Netzgleichrichter AC/DC zur Gleichrichtung der von einem Stromversorgungsnetz gelieferten Wechselspannung $\underline{U}_{Netz}$, einen als Elektrolytkondensator (Elko) realisierten, parallel zum Netzgleichrichter AC/DC geschalteten Speicherkondensator C1 zur Bereitstellung einer gleichgerichteten und geglätteten ersten Zwischenkreisspannung $\underline{U}_{C1}$, ein mit diesem verbundenes Oberwellenfilter OWF bestehend aus einer Serienschaltung zweier in Vorwärtsrichtung des von dem Netzgleichrichter AC/DC gelieferten pulsierenden Gleichstroms $\underline{I}_D$ angeordneter Gleichrichterdioden D1 und D2 und einem an den Mittenabgriff zwischen diesen beiden Dioden D1, D2 angeschlossenen, als Ladungspumpe wirkenden Pumpkondensator C2.

Die beiden Gleichrichterdioden D1, D2 des Oberwellenfilters OWF können dabei gleichzeitig Teil des Netzgleichrichters AC/DC sein.

Der Pumpkondensator C2 wird gemäss diesem Beispiel über die Sekundärwicklung eines Übertragers Tr2 induktiv mit dem im Lastkreis durch die Lampe LA1 fließenden Lampenstrom $\underline{I}_{LA}$ gespeist und dient zur Bereitstellung einer erhöhten zweiten Zwischenkreisspannung $\underline{U}_{C3}$ an einem als Energiespeicher wirkenden Ladekondensator C3 im Parallelzweig des Oberwellenfilters OWF.

Da der Übertrager einerseits durch den Lampenstrom gespeist wird und der Übertrager andererseits die Energie für den Pumpkondensator bereitstellt, wird die Pumpschaltung automatisch abgeschaltet, wenn kein Lampenstrom fliesst. Wenn nämlich der Pumpkondensator C2 nicht mehr mit Energie versorgt wird und infolgedessen die Zwischenkreisspannung absinkt, sperren die beiden Dioden D1, D2 dauerhaft und die Netzspannung wird quasi "abgeschaltet".

Die Erfindung betrifft im übrigen alle schaltungstechnischen Ausgestaltungen, die es ermöglichen, dass bei Ausfall des Lampenstroms auch die Pumpschaltung abgeschaltet wird. Eine weitere Ausführungsform der Erfindung liegt daher bspw. in dem Ersetzen des Übertragers durch einen Leistungschalter einer Pegelversatzstufe, wobei der Leistungschalter bei Ausfall des Lampenstroms automatisch den Pumpkondensator abschaltet. Allgemein wird also der Lampenstrom zur Versorgung des Pumpkondensators ausgekoppelt, um den Pumpvorgang von dem Lampenstrom abhängig zu machen.

Weitere alternative Ausführungsformen sind bspw. kapazitive oder piezoelektrische Koppler, die wie der Übertrager den Vorteil der galvanischen Trennung aufweisen.

Beim Einschalten der Netzspannung bei Inbetriebnahme des Geräts ist die Pumpschaltung natürlich ausser Betrieb, solange kein Lampenstrom fliesst. Somit kann die Pumpschaltung vor dem Zünden der Lampe ihre Funktion der Glättung der Stromentnahme nicht ausüben. Dies kann indessen in Kauf genommen werden, da die einschlägigen Vorschriften die daraus resultierende nicht-sinusförmige Stromaufnahme zeitlich begrenzt bis zum Zünden der Lampe ausdrücklich gestatten.

Das Vorsehen des Übertragers zur Bereitstellung der Energie für den Pumpkondensator hat den weiteren Vorteil, dass durch die Wahl seines Übersetzungsverhältnisses eine weitere Entwurfsfreiheit erlangt wird.

Schliesslich kann der Übertrager derart ausgelegt werden, dass die maximale Zwischenkreisspannung durch den Moment begrenzt wird, in dem der Übertrager in Sättigung gelangt und somit seine Trafofunktion nicht mehr ausüben kann.

Ein weiterer Freiheitsgrad bei der Auslegung des Übertragers ist der Wicklungssinn, von dem es nämlich abhängt, in welcher Phase des Wechselrichters der Pumpvorgangs erfolgt. Der Wicklungssinn kann somit bewusst zur Verbesserung des Störspektrums gewählt werden. Bspw. können hochfrequente Störungen am Speicherkondensator C1 verringert werden, wenn der Wicklungssinn derart gewählt wird, dass der Pumpvorgang genau in der Phase erfolgt, während der der Wechselrichter Energie vom Zwischenkreis aufnimmt. Da andererseits der Anteil hochfrequenter Störspitzen die Lebensdauer dieses (teuren) Speicherkondensators C1 massgeblich bestimmt, kann durch die gezielte Wahl des Wicklungssinns der Speicherkondenstor C1 geschont werden.

Das erfindungsgemäße elektronische Lampenvorschaltgerät weist weiterhin wie bekannt einen Wechselrichter DC/AC zur Erzeugung des zum Betrieb der Lampe LA1 erforderlichen hochfrequenten Lampenstroms $\underline{I}_{LA}$ auf, bestehend aus zwei in einer Halbbrückenschaltung in Serie geschalteten Leistungstransistoren T1 und T2, die von einer Steuereinheit durch Anlegen der Steuerspannungen $\underline{U}_{G1}$ bzw. $\underline{U}_{G2}$ an ihre Gate-Elektroden gesteuert werden, einem mit dem Mittenabgriff der beiden Leistungstransistoren T1 und T2 verbundenen Serienresonanzkreis SRK zur Resonanzzündung der Gasentladungslampe LA1, bestehend aus der Serienschaltung einer Resonanzkapazität C5 und einer Resonanzinduktivität L sowie dem damit verbundenen Lastkreis, in dem die Primärwicklung eines Übertragers Tr2, der als Rückkopplungsglied zwischen Lastkreis und Ladungspumpe fungiert und zur Versorgung des Pumpkondensators C2 mit dem hochfrequenten Lampenstrom $\underline{I}_{LA}$ dient, ein Koppelkondensator C4 zur Filterung von Gleichstromanteilen des Lampenstroms $\underline{I}_{LA}$ und die Niederdruck-Gasentladungslampe LA1 in Serie geschaltet sind.

Als Funkentstörfilter zur Filterung hochfrequenter Störspitzen dient ein dem Netzgleichrichter vorangeschalteter Tiefpass TP, bestehend aus zwei netzparallelen Siebkondensatoren CF1 und CF2 und einem Transformator Tr1 zur Glättung der Netzspannung $\underline{U}_{Netz}$.

Die in Fig. 3b gezeigte zweite Ausführungsform 300b des erfindungsgemäßen elektronischen Lampenvorschaltgeräts weist dieselbe Schaltungstopologie auf, ist aber für den Betrieb zweier in Serie geschalteter Niederdruck-Gasentladungslampen LA1, LA2, mit einem Leistungsverbrauch von bspw. je 50 W ausgelegt.

Die Serienschaltung der beiden Lampen wird dabei dadurch ermöglicht, dass der Spannungsabfall an dem Übertrager geringer ist als der an der Spannungsquelle für den Pumpkondensator bekannter Schaltungen, wodurch die verbleibende Spannung für den Betrieb zweier in Serie geschalteter Lampen ausreicht.

Im übrigen können bei der Verwendung eines Übertragers gemäss der vorliegenden Erfindung auch mehrflammige Lampen betrieben werden, indem jede Lampe mit einer Primärspule in Serie geschaltet ist, die induktiv mit einer gemeinsamen Sekundärspule der Pumpschaltung gekoppelt sind.

Bei den beiden Versionen der in den Figuren 3a und 3b abgebildeten aktiven PFC-Schaltungen ist das Prinzip einer konventionellen Ladungspumpe verwirklicht. Wie die in der europäischen Patentschrift EP 0 253 224 B1 offenbarte Schaltungsanordnung weisen auch die in den Figuren 3a und 3b gezeigten PFC-Schaltungen einen als einstufige Ladungspumpe dienenden Pumpkondensator C2 auf. Während einer ersten Halbwelle des Wechselrichters wird dieser Pumpkondensator C2 über die Gleichrichterdiode D1 und die Sekundärwicklung des Übertragers Tr2 auf den Wert der am Speicherkondensator C1 abfallenden ersten Zwischenkreisspannung $\underline{U}_{C1}$ aufgeladen. Gleichzeitig wird auch der Ladekondensator C3 über die Gleichrichterdioden D1 und D2 auf den Wert der am Speicherkondensator C1 abfallenden ersten Zwischenkreisspannung $\underline{U}_{C1}$ aufgeladen. Während einer weiteren Halbwelle des Wechselrichters wird der Pumpkondensator C2 über die Sekundärwicklung des Transformators Tr2, die Gleichrichterdiode D2 und den Ladekondensator C3, der inzwischen bereits auf die erste Zwischenkreisspannung $\underline{U}_{C1}$ aufgeladen ist, entladen, d.h. ein Teil der in C2 gespeicherten Ladung wird über die Gleichrichterdiode D2 in den Ladekondensator C3 gepumpt, wodurch der Betrag der an C3 abfallenden zweiten Zwischenkreisspannung $\underline{U}_{C3}$ nahezu (d.h. abzüglich der Schwellspannungen der beiden Gleichrichterdioden D1 und D2) auf den doppelten Wert der Zwischenkreisspannung $\underline{U}_{C1}$ erhöht wird. Der Maximalwert der an dem Ladekondensator C3 abfallenden zweiten Zwischenkreisspannung $\underline{U}_{C3}$ (der Versorgungsspannung des Wechselrichters DC/AC) wird dabei durch den Sättigungsstrom festgelegt, der durch die den Pumpkondensator C2 speisenden Primärwicklung des Lastkreis-Übertragers Tr2 fließt und für eine Glättung von $\underline{U}_{C3}$ sorgt. Die beiden Gleichrichterdioden D1 und D2 bewirken hierbei, dass sich die beiden Kondensatoren C2 und C3 während der zweiten Halbwellen des Wechselrichters nicht wieder über den Speicherkondensator C1 und die Primärwicklung des Übertragers Tr2 entladen können.

Mit Hilfe des erfindungsgemäß erweiterten AVF-Verfahrens können die nach dem IEC-Standard 1000-3-2 in Bezug auf Netzoberwellen vorgeschriebenen Grenzwerte ohne Zuhilfenahme eines in Serie zu den Niederdruck-Gasentladungslampen (LA1, LA2) geschalteten, als Drosselspule zur Begrenzung des Lampenstroms ($\underline{I}_{LA}$) wirkenden induktiven Blindwiderstands eingehalten werden, so dass ein störungsfreier, sicherer Betrieb der Niederdruck-Gasentladungslampen (LA1, LA2) gewährleistet ist. Im Gegensatz zu herkömmlichen AVF-Lösungen kommt es bei einem Ausfall einer der Lampen LA1 bzw. LA2 nicht zu einem unzulässigen Anstieg der Zwischenkreisspannung $\underline{U}_{c3}$, da der Pumpkondensator C2 in diesem Falle nicht durch den über die Primärwicklung des Lastkreis-Übertragers Tr2 ausgekoppelten Lampenstrom $\underline{I}_{LA}$ mit Energie versorgt wird.

Die Vorteile der erfindungsgemäßen Pumpschaltungen 300a+b liegen somit in einer größeren Netzfreundlichkeit durch signifikante Reduzierung der Oberwellen sowie einer Erhöhung des Leistungsfaktors λ.

Weitere Vorteile der erfindungsgemäßen Schaltung bestehen in der begrenzten Leistungsverstärkung bei Betrieb im Bereich der Sättigung des Transformators Tr2, den geringen Abmessungen dieses Transformators bei Betrieb mit geringen Leistungen und der Möglichkeit einer kostengünstigen, einfachen Realisierung der Schaltung ohne Verwendung zusätzlicher Komponenten zur Regelung des durch die Lampen fließenden Stroms $\underline{I}_{LA}$ und den an ihnen abfallenden Spannungen $\underline{U}_{LA1}$ bzw. $\underline{U}_{LA2}$. Das Sättigungsverhalten des Transformators Tr2 kann.also im Sinne eines automatischen Schutzmechanismus ausgenützt werden.

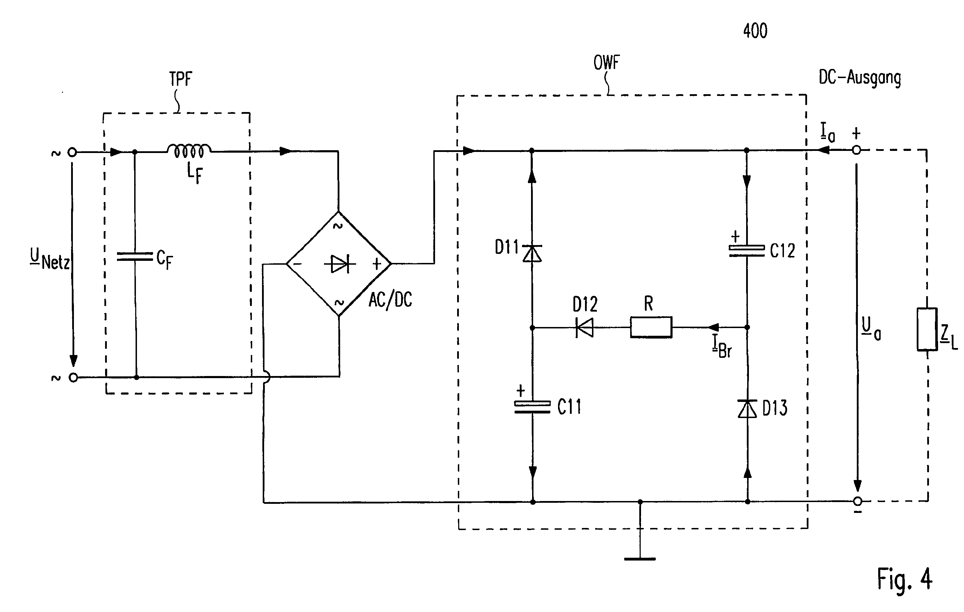

Nachfolgend soll nunmehr eine Erweiterung des erfindungsgemäßen Konzepts vorgestellt werden. Diese Weiterbildung beruht auf einer Kombination der bisher besprochenen aktiven Leistungsfaktorkorrektur über eine Ladungspumpe mit einer auf dem Prinzip des sog. "Passive Valley Fill" (PVF) beruhenden passiven Leistungsfaktorkorrekturschaltung. Bei dieser PVF-Schaltung handelt es sich um eine kostengünstig zu realisierende Möglichkeit, die ebenfalls zur Erhöhung des Leistungsfaktors λ (bspw. auf Werte von mehr als 95 %) vorgesehen ist und deren allgemeines Prinzip zunächst anhand von Fig. 4 erläutert werden soll.

In dieser Schaltung werden zwei Ladekondensatoren C11 und C12 eines Oberwellenfilters OWF im Bereich des Netzspannungsmaximums über die Serienschaltung der Gleichrichterdiode D12 und des Vorwiderstands R im Brückenzweig des Oberwellenfilters OWF seriell aufgeladen, und zwar - unter der Annahme, dass die Kapazitäten der Kondensatoren C11 und C12 den gleichen Wert aufweisen - jeweils auf die Hälfte des Spitzenwerts $\hat{U}_{Netz}$ der Eingangsspannung $\underline{U}_{Netz}$ - abzüglich der Schwellspannungen der beiden Gleichrichterdioden des Netzgleichrichters AC/DC sowie der Schwellenspannung der Diode D12. Der Brückenwiderstand R sorgt in diesem Zusammenhang für eine Begrenzung von Störspitzen des im Brückenzweig des Oberwellenfilters OWF fließenden Ladestroms $\underline{I}_{Br}$ während der Ladephase der beiden Ladekondensatoren C11 und C12.

Im Bereich des Nulldurchgangs der Netzspannung (Netzspannungsminimum) werden die beiden Ladekondensatoren C11 und C12 über die Gleichrichterdioden D11 bzw. D13 parallel entladen und liefern dabei solange einen lastabhängigen Ausgangsstrom $\underline{I}_a$, bis die gleichgerichtete Spannung am Ausgangstor des Netzgleichrichters AC/DC im Verlauf der nächsten Ladephase der Kondensatoren C11 und C12 wieder auf die Hälfte des Spitzenwerts $\hat{U}_{Netz}$ der Eingangsspannung $\underline{U}_{Netz}$ angestiegen ist. Die Dauer der Entladephase der beiden Kondensatoren C11 und C12 beträgt dabei näherungsweise 37% der Dauer eines vollständigen Lade-/Entladezyklus, gefolgt von einer Leerlaufphase, während der die durch die Lastimpedanz $\underline{Z}_L$ modellierte Gasentladungslampe LA am Ausgangstor der Schaltung mit dem gleichgerichteten und geglätteten Strom $\underline{I}_a$ gespeist wird. Bei Erreichen des Spitzenwerts $\hat{U}_{Netz}$ der Eingangsspannung $\underline{U}_{Netz}$ beginnt wiederum eine neue Ladephase. Die Größe und Dauer des einsetzenden Ladestroms $\underline{I}_{Br}$ ist dabei eine Funktion der während der Entladephase von den Kondensatoren C11 und C12 freigesetzten Gesamtladung $Q_{ges}$ und der Größe des Brückenwiderstands R im Ladekreis.

Das LC-Tiefpassfilter TPF im Eingangskreis, bestehend aus einem netzparallelen Siebkondensator $C_F$ und einer Drosselspule $L_F$, dient zur Filterung von hochfrequenten Anteilen des Netzstroms. Darüber hinaus bewirkt es eine Glättung des Eingangsstroms $\underline{I}_{Netz}$.

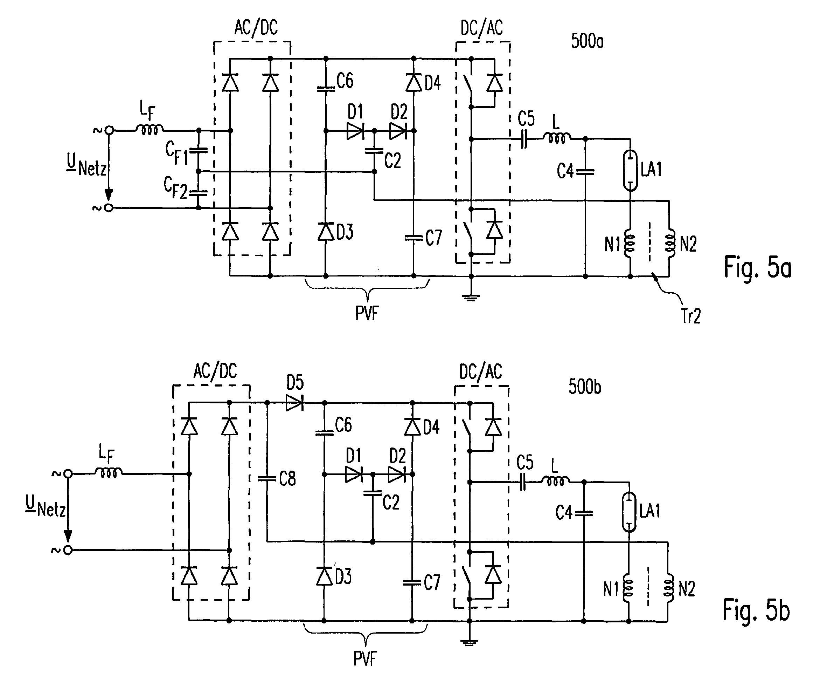

Fig. 5a zeigt nunmehr eine erste erfindungsgemäße Schaltungsvariante 500a, bei der das in Fig. 4 dargestellte Konzept des "Passive Valley Fill" durch eine aktive Leistungsfaktorkorrektur mit Hilfe einer Ladungspumpe ergänzt wurde. Elemente dieser Schaltung, die identisch zu den Elementen der in den Figuren 3a und b dargestellten Schaltungen sind, wurden dabei mit dem gleichen Bezugszeichen versehen.

Diese erweiterte Schaltung weist somit zunächst wiederum einen als Gleichrichter-Vollbrücke realisierten Netzgleichrichter AC/DC zur Gleichrichtung der von dem Stromversorgungsnetz gelieferten Wechselspannung $\underline{U}_{Netz}$, einen Wechselrichter DC/AC zur Erzeugung des zum Betrieb der Lampe LA1 erforderlichen hochfrequenten Lampenstroms, einen mit dem Ausgang des Wechselrichters DC/AC verbundenen Serienresonanzkreis zur Resonanzzündung der Gasentladungslampe LA1, bestehend aus der Serienschaltung der Resonanzkapazität C5 und der Resonanzinduktivität L, sowie den damit verbundenen Lastkreis auf, in dem die Primärwicklung N1 des Übertragers Tr2, der Koppelkondensator C4 und die Niederdruck-Gasentladungslampe LA1 in Serie geschaltet sind.

Zwischen dem Gleichrichter AC/DC und dem Wechselrichter DC/AC ist nun allerdings eine passive Leistungsfaktorkorrekturstufe PVF angeordnet, die - ebenso wie die in Fig. 4 dargestellte Schaltungsanordnung - zwei Ladekondensatoren C6 und C7 aufweist, die über vier Gleichrichterdioden D1 bis D4 derart miteinander verschaltet sind, dass sie in Serie aufgeladen und parallel in Richtung des Wechselrichters DC/AC entladen werden können.

Die Zusammenführung der beiden Konzepte der aktiven und der passiven Leistungsfaktorkorrektur erfolgt nun dadurch, dass der Brückenzweig der PVF-Stufe durch zwei in Serie geschaltete Dioden D1 und D2 gebildet wird, an deren Mittenabgriff ein Pumpkondensator C2 angeschlossen ist, der seinem anderen Anschluß wiederum mit der Sekundärwicklung N2 des Übertragers Tr2 und ferner mit dem Verbindungspunkt zwischen zwei Filterkondensatoren $C_{F1}$ und $C_{F2}$ verbunden, die ihrerseits gemeinsam mit einer Drosselspule $L_F$ ein LC-Tiefpassfilter zur Filterung von hochfrequenten Anteilen des Netzstroms $\underline{U}_{netz}$ bilden.

Die beiden Ladekondensatoren C6 und C7 der PVF-Stufe arbeiten in gewohnter Weise, d.h., sie werden wie bei der bekannten Schaltungsanordnung in Fig. 4 in Serie aufgeladen und parallel in Richtung des Wechselrichters DC/AC entladen, wobei die Lade- und Entladevorgänge nunmehr durch die Ladungspumpe unterstützt werden. Die beiden Filterkondensatoren $C_{F1}$ und $C_{F2}$ fungieren hierbei ebenfalls als Pumpkondensatoren, die über die gesamte Dauer einer Netzhalbwelle hinweg einen Netzstrom ziehen und je nach Höhe der Netzspannung $U_{netz}$ ihre Ladung entweder nur dem Ausgangskreis, also dem Wechselrichter DC/AC mit dem daran angeschlossenen Lastkreis oder sowohl dem Ausgangskreis als auch der PVF-Stufe zuführen.

Liegt beispielsweise eine niedrige Netzspannung $U_{netz}$ vor, die unterhalb der an den Kondensatoren $C_6$ und $C_7$ anliegenden Spannung liegt, so erfolgt eine Stromaufnahme durch die beiden Kondensatoren $C_{F1}$ und $C_{F2}$, wobei der Strom allerdings lediglich unmittelbar in den Ausgangskreis fließt, nicht jedoch in PVF-Stufe. In diesem Zeitraum werden somit die beiden Ladekondensatoren $C_6$ und $C_7$ nicht aufgeladen sondern speisen statt dessen ebenfalls durch eine parallele Entladung den Ausgangskreis.

Liegt hingegen eine hohe Netzspannung $U_{netz}$ vor, die oberhalb der an den Kondensatoren $C_6$ und $C_7$ anliegenden Spannung liegt, so erfolgt wiederum eine Speisung des Ausgangskreises durch das Netz, gleichzeitig werden allerdings auch die beiden Kondensatoren $C_6$ und $C_7$ durch einen gleichmäßigen, der Netzspannung $U_{netz}$ folgenden Ladestrom aufgeladen. Das Nachladen dieser beiden Kondensatoren wird dabei durch den mit der Sekundärwicklung N2 des Übertragers Tr2 verbundenen Pumkondensator C2 unterstützt, wobei durch diese Rückkopplung in Verbindung mit der Wirkungsweise der "Passive Valley Fill"-Schaltung ein besonders guter Leistungsfaktor λ erzielt wird.

Durch die Verbindung der erfindungsgemäßen, durch den Lampenstrom gesteuerten Ladungspumpe mit dem Konzept der passiven Leistungsfaktorkorrektur wird somit eine Schaltungsanordnung erhalten, die sich durch eine besonders hohe Netzfreundlichkeit sowie eine signifikante Reduzierung der Oberwellen auszeichnet. Bemerkenswert hierbei ist auch, dass die gesamte Schaltungsanordnung durch verhältnismäßig wenig Bauteile realisiert werden kann und somit sehr kostengünstig ist.

Nachfolgend sollen nunmehr einige Varianten des in Fig. 5a dargestellten Konzepts einer kombinierten aktiv-passiven Leistungsfaktorkorrektur beschrieben werden.

Fig. 5b zeigt eine erste Variante 500b, bei der die Einkopplung zur Stromaufnahme während einer Phase niedriger Netzspannung $U_{netz}$ nicht über zwei vor dem Gleichrichter AC/DC angeordnete Filterkondensatoren sondern statt dessen über einen einzigen, an den Ausgang des Gleichrichters AC/DC angeschlossenen und mit dem Pumpkondensator C2 verbunden Kondensator C8 erfolgt. Zwar kann in diesem Fall ein Kondensator eingespart werden, dieser Vorteil wird allerdings wieder zumindest teilweise dadurch wettgemacht, dass nunmehr eine zusätzliche schnelle Diode D5 vor der PVF-Stufe erforderlich ist, um die korrekte Funktion des Einkopplungskondensators C8 sicherzustellen. Hinsichtlich der Funktionsweise dieser Variante kann auf die Ausführungen zu Fig. 5a verwiesen werden, wobei die Funktion der beiden Filterkondensatoren nunmehr von dem Einkopplungskondensators C8 übernommen wird.

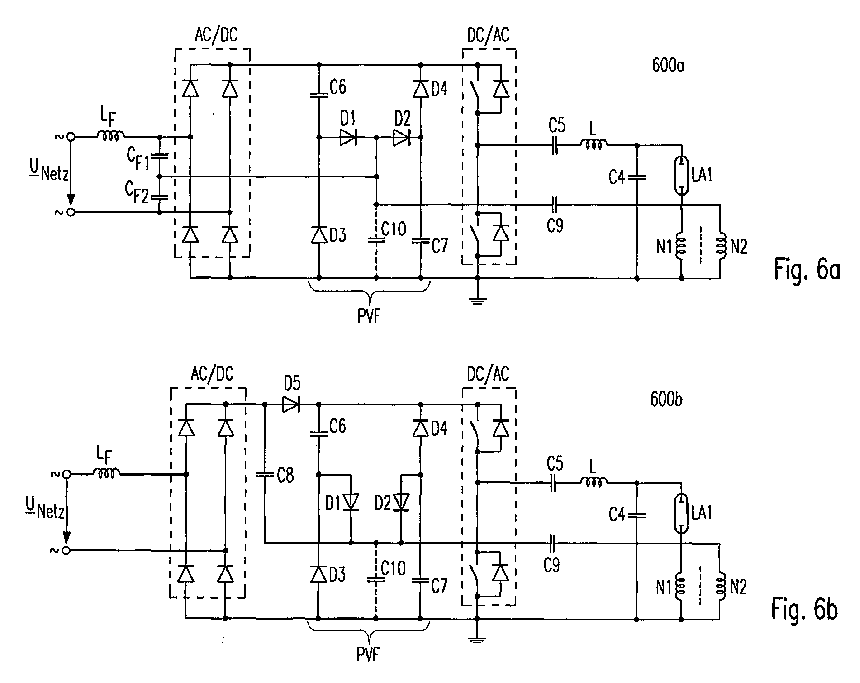

Fig. 6a zeigt eine weitere Variante 600a der Schaltung von Fig. 5a, in der auf den separaten Pumpkondensator C2 verzichtet wurde. Statt dessen ist Block-Kondensator C9 vorgesehen, der mit seinem einen Anschluß mit der Sekundärwicklung N2 des Übertragers Tr2 und mit seinem anderen Anschluß sowohl mit dem Mittenabgriff der beiden Dioden D1 und D1 als auch mit dem Mittenabgriff der beiden Filterkondensatoren $C_{F1}$ und $C_{F2}$ verbunden ist.

Hinsichtlich ihrer Funktionsweise ist diese Schaltungsvariante wiederum sehr ähnlich zu der Schaltung in Fig. 5a, d.h., die beiden Filterkondensatoren $C_{F1}$ und $C_{F2}$ ziehen über die gesamte Netzhalbwelle hinweg einen Strom und speisen bei niedriger Netzspannung $U_{netz}$ den Ausgangskreis, bei hoher Netzspannung $U_{netz}$ darüber hinaus auch die Kondensatoren C6 und C7 der PVF-Stufe. Der Kondensator C9 dient dabei lediglich während der Phase niedriger Netzspannung als Block-Kondensator, während hoher Netzspannung wirkt er hinsichtlich der Kondenstoren C6 und C7 auch als Pumpkondensator. Ist nämlich die Eingangsspannung höher als die an dem Kondensator C6 anliegende Spannung abzüglich der Pumpspannung, so kann Ladung in den Kondensator C9 fließen und die Speicherkondensatoren C6 und C7 werden nachgeladen. Die Kapazität des Kondensators C9 muß dabei größer als die Kapazitäten der beiden Filterkondensatoren $C_{F1}$ und $C_{F2}$ sein, damit während der Phase hoher Netzspannung neben der Ladung dieser beiden Filterkondensatoren $C_{F1}$ und $C_{F2}$ - die ebenfalls in den Kondensator C9 fließt - noch eine Umladung von dem Kondensator C9 über die beiden Kondenstoren C6 und C7 erfolgen kann.

Auch diese Schaltungsvariante kann - wie in Fig. 6b dargestellt ist - dahingehend abgewandelt werden, dass die Einkopplung anstelle mit Hilfe der beiden Filterkondensatoren $C_{F1}$ und $C_{F2}$ durch einen einzelnen, dem Gleichrichter AC/DC nachgeschalteten Kondensator C8 erfolgt, wobei dann wiederum die Anordnung einer zusätzlichen Diode D5 erforderlich ist. Darüber hinaus kann in beiden Schaltungen der Fig. 6a und 6b ein ergänzender Kondensator C10 vorgesehen sein, der zusätzlich zur Entstörung beiträgt und als HF-Filter zu sehen ist.

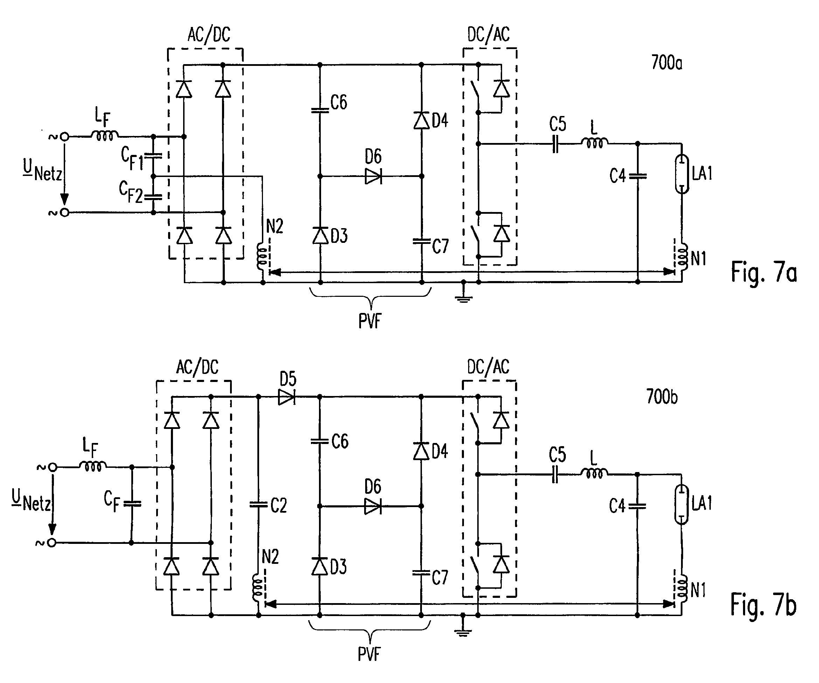

Eine andere Möglichkeit der Kombination von aktiver und passiver Leistungsfaktorkorrektur ist in Fig. 7a dargestellt. Bei dieser Variante 700a ist zwischen dem Gleichrichter AC/DC und dem Wechselrichter DC/AC eine klassische "Passive Valley Fill"-Schaltung angeordnet, wobei die Sekundärspule N2 des Übertragers unmittelbar mit dem Mittenabgriff der beiden Filterkondensatoren $C_{F1}$ und $C_{F2}$ verbunden ist.

Die Funktion der Ladungspumpe besteht in diesem Fall lediglich darin, einen geringen Strom zu ziehen, der aufgrund des dadurch während des Nulldurchganges der Netzspannung $U_{netz}$ fließenden Stromes eine Einhaltung der Harmonischen gemäß der einschlägigen Norm zuläßt. Die Funktionsweise der PVF-Stufe wird durch die Pumpfunktion hingegen nicht weiter beeinflußt.

Die beiden Speicherkondensatoren C6 und C7 der PVF-Stufe können verhältnismäßig klein gewählt werden, da aufgrund der Stromaufnahme während des Nulldurchgangs der Netzspannung der Eingangsstrom innerhalb vorgeschriebene Grenzen liegt. Nachteilig im Vergleich zu den Schaltungsanordnungen der Figuren 5a bis 6b ist jedoch, dass - wie bei einer klassischen PVF-Schaltung - verhältnismäßig starke Schwankungen der Busspannung, d.h., der an den Speicherkondensatoren C6 und C7 abfallenden Spannung vorliegen.

Wie bei den Schaltungen zuvor besteht auch bei dieser Variante die Möglichkeit, die Einkopplung der Ladungspumpe erst nach dem Gleichrichter AC/DC mit Hilfe eines einzigen Kondensators C2 vorzunehmen, wobei in diesem Fall allerdings wiederum eine Diode D5 vor der PVF-Stufe angeordnet werden muß. Die entsprechend abgewandelte Schaltung 700b ist in Fig. 7b dargestellt.

Anzumerken ist, dass auch bei den Schaltungsanordnungen der Figuren 5a bis 7b die Vorteile der Schaltungen der Fig. 3a und 3b gewahrt bleiben. Auch bei diesen Schaltungen hängt somit die Leistungsübertragung der Ladungspumpe unmittelbar und ausschließlich von dem Lampenstrom ab, so dass bei einem Ausfall der Lampe bzw. Lampen automatisch auch die Funktion der Ladungspumpe stoppt. Darüber hinaus erlaubt die Kopplung des die Lampe und den Übertrager beinhaltenden Kreises gegen Masse eine einfache Ermittlung der Lampenkenngrößen (Strom und Spannung), die bei anderen Schaltungen nicht gegeben ist.

Insgesamt gesehen offenbart somit die vorliegende Erfindung eine Schaltung zum Betreiben einer Last, insbesondere einer Gasentladungslampe, die sich durch ihre extrem hohe Netzfreundlichkeit auszeichnet. Dabei kann ein besonders hoher Leistungsfaktor insbesondere dadurch erzielt werden, dass die Konzepte einer aktiven und einer passiven Leistungsfaktorkorrektur miteinander verbunden werden.

**Patentansprüche**

1. Vorschaltgerät für wenigstens eine Gasentladungslampe (LA1), aufweisend:

   - einen Netzgleichrichter (AC/DC),
   - einen Wechselrichter (DC/AC),
   - einen Serienresonanzkreis (SRK), bestehend aus der Serienschaltung einer Resonanzkapazität (C5) und einer Resonanzinduktivität (L), und
   - ein Oberwellenfilter (OWF), das eine Reihenschaltung zweier Gleichrichterdioden (D1, D2), die in Vorwärtsrichtung an dem Netzgleichrichter (AC/DC) angeschlossen sind, und einen Pumpkondensator (C2) aufweist, der mit dem Mittenabgriff der beiden Gleichrichterdioden (D1, D2) verbunden ist,

   **gekennzeichnet durch**,
   ein Element (Tr2) zur galvanisch getrennten Auskopplung des Lampenstroms zur Energieversorgung des Pumpkondensators (C2),
   wobei der Pumpkondensator (C2) bei Ausfall des Lampenstroms automatisch abgeschaltet wird bzw. abschaltet.

2. Vorschaltgerät nach Anspruch 1,
   **dadurch gekennzeichnet,**
   **dass** der Pumpkondensator (C2) durch einen Übertrager (Tr2) induktiv mit dem durch die Lampe (LA1) fließenden Strom ($I_{LA}$) gespeist ist.

3. Vorschaltgerät nach Anspruch 2,
   **dadurch gekennzeichnet,**
   **dass** der Übertrager (Tr2) mit einer Elektrode ($E_{1,1}$) der Lampe (LA1) verbunden ist.

4. Vorschaltgerät nach Anspruch 2 oder 3,
   **dadurch gekennzeichnet,**
   **dass** der Wicklungssinn des Übertragers (Tr2) derart gewählt ist, dass der Ladevorgang des Pumpkondensators (C2) im wesentlichen in derjenigen Phase erfolgt, während der der Wechselrichter (DC/AC) Energie bezieht.

5. Vorschaltgerät nach einem der vorhergehenden Ansprüche,
   **dadurch gekennzeichnet,**
   **dass** es zum Betrieb wenigstens zweier in Serie geschalteter Lampen (LA1, LA2) ausgelegt ist.

**6.** Vorschaltgerät nach einem der vorhergehenden Ansprüche,
**dadurch gekennzeichnet,**
**dass** vor den Gleichrichterdioden (D1, D2) ein Speicherkondensator (C1) parallel zu dem Netzgleichrichter (AC/DC) geschaltet ist.

**7.** Vorschaltgerät nach einem der vorhergehenden Ansprüche,
**dadurch gekennzeichnet,**
**dass** die Gleichrichterdioden (D1, D2) des Oberwellenfilters (OWF) gleichzeitig Teil des Netzgleichrichters (AC/DC) sind.

**8.** Vorschaltgerät für wenigstens eine Gasentladungslampe (LA1), aufweisend:

- einen Netzgleichrichter (AC/DC),
- einen Wechselrichter (DC/AC),
- einen Serienresonanzkreis (SRK), bestehend aus der Serienschaltung einer Resonanzkapazität (C5) und einer Resonanzinduktivität (L), und
- ein Oberwellenfilter (PVF) mit Ladekondensatoren (C6, C7), welche in einer Phase einer gleichgerichteten Netzspannung ($\underline{U}_{Netz}$) in Serie aufgeladen und in einer weiteren Phase parallel in Richtung des Wechselrichters (DC/AC) entladen werden,

**gekennzeichnet durch**,
eine Ladungspumpe, über welche ein Teil der der Lampe zugeführten Energie zu den Ladekondensatoren (C6, C7) des Oberwellenfilters (PVF) und/oder weiterer Kondensatoren ($C_{F1}$, $C_{F2}$, C2, C8) zurückgeführt wird,
wobei die Ladungspumpe **durch** den Lampenstrom gespeist und bei Ausfall des Lampenstroms automatisch abgeschaltet wird bzw. abschaltet.

**9.** Vorschaltgerät nach Anspruch 8,
**dadurch gekennzeichnet,**
**dass** die Ladungspumpe ein Element (Tr2) zur galvanisch getrennten Auskopplung des Lampenstroms zur Energieversorgung der Ladekondensatoren (C6, C7) bzw. der weiteren Kondensatoren ($C_{F1}$, $C_{F2}$, C2, C8) aufweist.

**10.** Vorschaltgerät nach Anspruch 9,
**dadurch gekennzeichnet,**
**dass** das Auskopplungselement durch einen Übertrager (Tr2) gebildet ist, dessen Primärwicklung (N1) in Serie zu der Lampe (LA1) angeordnet ist.

**11.** Vorschaltgerät nach einem der Ansprüche 8 bis 10,
**dadurch gekennzeichnet,**
**dass** die beiden Ladekondensatoren (C6, C7) des Oberwellenfilters (PVF) in zwei Parallelzweigen einer "Passive Valley Fill"-Schaltung angeordnet sind, die über einen Brückenzweig miteinander verbunden sind.

**12.** Vorschaltgerät nach Anspruch 11,
**dadurch gekennzeichnet,**
**dass** die Energie der Ladungspumpe einem Verbindungspunkt zweier in dem Brückenzweig angeordneter Dioden (D1, D2) zugeführt wird.

**13.** Vorschaltgerät nach Anspruch 9 und Anspruch 12,
**dadurch gekennzeichnet,**
**dass** an den Verbindungspunkt des Brückenzweiges ein Pumpkondensator (C2) angeschlossen ist, der mit seinem weiteren Anschluss mit einer Sekundärwicklung (N2) des Übertragers (TR2) verbunden ist.

**14.** Vorschaltgerät nach Anspruch 13,
**dadurch gekennzeichnet,**
**dass** der Pumpkondensator (C2) mit seinem weiteren Anschluss ferner mit einem Mittenabgriff zweier vor dem Gleichrichter (AC/DC) angeordneter Filterkondensatoren ($C_{F1}$, $C_{F2}$) verbunden ist.

**15.** Vorschaltgerät nach Anspruch 11,
**dadurch gekennzeichnet,**

**dass** die Energie der Ladungspumpe einem Pumpkondensator (C2) zugeführt wird, der parallel zu den beiden Parallelzweigen der "Passive Valley Fill"-Schaltung angeordnet ist.

16. Verfahren zum Betrieb wenigstens einer Gasentladungslampe (LA1), aufweisend:

- einen Netzgleichrichter (AC/DC),
- einen Wechselrichter (DC/AC),
- einen Serienresonanzkreis (SRK), bestehend aus der Serienschaltung einer Resonanzkapazität (C4) und einer Resonanzinduktivität (L), und
- ein Oberwellenfilter (OWF), das eine Reihenschaltung zweier Gleichrichterdioden (D1, D2), die in Vorwärtsrichtung an dem Netzgleichrichter (AC/DC) angeschlossen sind, und einen Pumpkondensator (C2) aufweist, der mit dem Mittenabgriff der beiden Gleichrichterdioden (D1, D2) verbunden ist,

**dadurch gekennzeichnet,**

**dass** die Energie für den Pumpkondensator (C2) durch eine galvanisch getrennte Auskopplung des durch die Lampe (LA1) fließenden Strom ($I_{LA}$) bereitgestellt wird,
wobei der Pumpkondensator (C2) bei Ausfall des Lampenstroms automatisch abgeschaltet wird bzw. abschaltet.

17. Verfahren nach Anspruch 16,
**dadurch gekennzeichnet,**
**dass** die Auskopplung derart gewählt ist, dass der Pumpkondensator (C2) in derjenigen Phase geladen wird, während der der Wechselrichter (DC/AC) Energie bezieht.

18. Verfahren nach Anspruch 16 oder 17,
**dadurch gekennzeichnet,**
**dass** die Energie für den Pumpkondensator (C2) induktiv (Tr2) ausgekoppelt wird.

19. Verfahren nach Anspruch 18,
**dadurch gekennzeichnet,**
**dass** die maximale Spannung an dem Wechselrichter (DC/AC) durch den Sättigungsbereich der induktiven Kopplung (Tr2) festgelegt ist.

20. Verfahren nach einem der Ansprüche 16 bis 19,
**dadurch gekennzeichnet,**
**dass** wenigstens zwei in Serie geschaltete Lampen (LA1, LA2) betrieben werden.

21. Verfahren zum Betrieb wenigstens einer Gasentladungslampe (LA1), aufweisend:

- einen Netzgleichrichter (AC/DC),
- einen Wechselrichter (DC/AC),
- einen Serienresonanzkreis (SRK), bestehend aus der Serienschaltung einer Resonanzkapazität (C4) und einer Resonanzinduktivität (L), und
- ein Oberwellenfilter (PVF) mit Ladekondensatoren (C6, C7), welche in einer Phase einer gleichgerichteten Netzspannung ($U_{Netz}$) in Serie aufgeladen und in einer weiteren Phase parallel in Richtung des Wechselrichters (DC/AC) entladen werden,

**gekennzeichnet durch**,
eine Ladungspumpe, deren den Ladekondensatoren (C6, C7) des Oberwellenfilters (PVF) und/oder weiteren Kondensatoren ($C_{F1}$, $C_{F2}$, C2, C8) zugeführte Energie **durch** Auskopplung des **durch** die Lampe (LA1) fließenden Stroms ($I_{LA}$) bereitgestellt wird, wobei die Ladungspumpe bei Ausfall des Lampenstroms automatisch abgeschaltet wird bzw. abschaltet.

**Claims**

1. Ballast for at least one gas discharge lamp (LA1), having:

- a mains rectifier (AC/DC)

- an inverter (DC/AC),
- a series resonance circuit (SRK), of a series circuit of a resonance capacitance (C5) and a resonance inductance (L), and
- a harmonics filter (OWF), which has a series circuit of two rectifier diodes (D1, D2), which are connected in the forward direction to the mains rectifier (AC/DC), and a pump capacitor (C2), which is connected with the middle tap of the two rectifier diodes -(D1, D2),

**characterized by**
an element (Tr2) for electrically isolated tapping off of the lamp current for the energy supply of the pump capacitor (C2),
wherein the pump capacitor (C2) automatically switches off, or is automatically switched off, upon failure of the lamp current.

2. Ballast according to claim 1,
**characterized in that**,
the pump capacitor (C2) is inductively fed with the current ($I_{LA}$) flowing through the lamp (LA1) by means of a transformer (Tr2).

3. Ballast according to claim 2,
**characterized in that**,
the transformer (Tr2) is connected with an electrode ($E_{1,1}$) of the lamp (LA1).

4. Ballast according to claim 2 or 3,
**characterized in that**,
the winding sense of the transformer (Tr2) is so selected that the charging process of the pump capacitor (C2) is substantially effected **in that** phase during which the inverter (DC/AC) draws energy.

5. Ballast according to any preceding claim,
**characterized in that**,
it is configured for the operation of at least two lamps (LA1, LA2) connected in series.

6. Ballast according to any preceding claim,
**characterized in that**,
there is connected upstream of the rectifier diodes (D1, D2) a storage capacitor (C1), parallel to the mains rectifier (AC/DC).

7. Ballast according to any preceding claim,
**characterized in that**,
the rectifier diodes (D1, D2) of the harmonics filter (OWF) are at the same time part of the mains rectifier (AC/DC).

8. Ballast for at least one gas discharge lamp (LA1), having:

- a mains rectifier (AC/DC),
- an inverter (DC/AC),
- a series resonance circuit (SRK), of a series circuit of a resonance capacitance (C5) and a resonance inductance (L), and
- a harmonics filter (PVF), having charge capacitors (C6, C7), which in one phase of a rectified mains voltage ($U_{Netz}$) are charged in series, and in a further phase are discharged in parallel in the direction of the inverter (DC/AC),

**characterized by**
a charge pump fed by means of which a part of the energy delivered to the lamp is returned to the charge capacitors (C6, C7) of the harmonics filter (PVF) and/or further capacitors ($C_{F1}$ and $C_{F2}$, C2, C8),
the charge pump being fed by means of the lamp current and automatically switching off, or being automatically switched off, upon failure of the lamp current.

9. Ballast according to claim 8,
**characterized in that**,

the charge pump has an element (Tr2) for the electrically isolated tapping off of the lamp current for the energy supply of the charge capacitors (C6, C7) or the further capacitors ($C_{F1}$ and $C_{F2}$, C2, C8).

10. Ballast according to claim 9,
**characterized in that**,
the element for tapping off is formed by means of a transformer (Tr2), the primary winding (N1) of which is arranged in series to the lamp (LA1).

11. Ballast according to any of claims 8 to 10,
**characterized in that**,
the two charge capacitors (C6, C7) of the harmonics filter (PVF) are arranged in two parallel branches of a "passive valley fill" circuit, which are connected with one another via a bridge branch.

12. Ballast according to claim 11,
**characterized in that**,
the energy of the charge pump is delivered to a connection point of two diodes (D1, D2) arranged in the bridge branch.

13. Ballast according to claim 9 and 12,
**characterized in that**,
there is connected at the connection point of the bridge branch a pump capacitor (C2) which is connected with its further terminal with a secondary winding (N2) of the transformer (Tr2).

14. Ballast according to claim 13,
**characterized in that**,
the pump capacitor (C2) is connected with its further terminal further with a middle tap of two filter capacitors ($C_{F1}$ and $C_{F2}$) arranged upstream of the rectifier (AC/DC).

15. Ballast according to claim 11,
**characterized in that**,
the energy of the charge pump is delivered to a pump capacitor (C2) which is arranged parallel to the two parallel branches of the "passive valley fill" circuit.

16. Method for the operation of at least one gas discharge lamp (LA1), having:

    - a mains rectifier (AC/DC),
    - an inverter (DC/AC),
    - a series resonance circuit (SRK), of a series circuit of a resonance capacitance (C4) and a resonance inductance (L), and
    - a harmonics filter (OWF), which has a series circuit of two rectifier diodes (D1, D2), which are connected in the forward direction to the mains rectifier (AC/DC), and a pump capacitor (C2), which is connected with the middle tap of the two rectifier diodes (D1, D2),

    **characterized in that**,
    the energy for the pump capacitor (C2) is made available by an electrically isolated tapping off of the current ($I_{LA}$) flowing through the lamp (LA1),
    wherein the pump capacitor (C2) automatically switches off, or is automatically switched off, upon failure of the lamp current.

17. Method according to claim 16,
**characterized in that**,
the tapping off is so selected that the pump capacitor (C2) is charged **in that** phase during which the inverter (DC/AC) draws energy.

18. Method according to claim 16 or 17,
**characterized in that**,
the energy for the pump capacitor (C2) is inductively (Tr2) tapped off.

19. Method according to claim 18,

**characterized in that**,
the maximum voltage at the inverter (DC/AC) is determined by means of the saturation region of the inductive coupling (Tr2).

20. Method according to any of claims 16 to 19,
    **characterized in that**,
    at least two lamps (LA1, LA2) connected in series are operated.

21. Method for operating at least one gas discharge lamp (LA1), having:

    - a mains rectifier (AC/DC),
    - an inverter (DC/AC),
    - a series resonance circuit (SRK), of a series circuit of a resonance capacitance (C4) and a resonance inductance (L), and
    - a harmonics filter (PVF), having charge capacitors (C6, C7), which in one phase of a rectified mains voltage ($\underline{U}_{netz}$) are charged in series, and in a further phase are discharged in parallel in the direction of the inverter (DC/AC),

    **characterized by**
    a charge pump, the energy of which, delivered to the charge capacitors (C6, C7) of the harmonics filter (PVF) and/or further capacitors ($C_{F1}$, $C_{F2}$, C2, C8), is made available by means of tapping off of the current ($\underline{I}_{LA}$) flowing through the lamp (LA1), the charge pump automatically switching off, or being automatically switched off, upon failure of the lamp current.

**Revendications**

1. Ballast électronique pour au moins une lampe à décharge (LA1), comportant :

   - un redresseur de secteur (CA/CC),
   - un onduleur (CC/CA),
   - un circuit de résonance en série (SRK), formé par le montage en série d'une capacité à résonance (C5) et d'une inductance à résonance (L), et
   - un filtre antiharmonique (OWF) qui comporte un montage en série de deux diodes de redressement (D1, D2), qui sont raccordées en sens direct au redresseur de secteur (CA/CC), et un condensateur de pompage (C2), qui est relié à la prise centrale des deux diodes de redressement (D1, D2),

   **caractérisé par**
   un élément (Tr2) pour le découplage par séparation galvanique du courant de la lampe vers l'alimentation en énergie du condensateur de pompage (C2),
   le condensateur de pompage (C2) étant déconnecté ou se déconnectant automatiquement en cas de panne du courant de la lampe.

2. Ballast selon la revendication 1, **caractérisé en ce que** le condensateur de pompage (C2) est alimenté, par un transformateur (Tr2), de manière inductive avec le courant ($I_{LA}$) circulant à travers la lampe (LA1).

3. Ballast selon la revendication 2, **caractérisé en ce que** le transformateur (Tr2) est relié à une électrode ($E_{1,1}$) de la lampe (LA1).

4. Ballast selon la revendication 2 ou 3, **caractérisé en ce que** le sens d'enroulement du transformateur (Tr2) est choisi de telle sorte que le processus de charge du condensateur de pompage (C2) s'effectue sensiblement dans la phase pendant laquelle l'onduleur (CC/CA) reçoit de l'énergie.

5. Ballast selon l'une quelconque des revendications précédentes, **caractérisé en ce qu'**il est dimensionné pour faire fonctionner au moins deux lampes (LA1, LA2) montées en série.

6. Ballast selon l'une quelconque des revendications précédentes, **caractérisé en ce qu'**un condensateur de puissance (C1) est monté en parallèle avec le redresseur de secteur (CA/CC) en amont des diodes de redressement (D1, D2).

**7.** Ballast selon l'une quelconque des revendications précédentes, **caractérisé en ce que** les diodes de redressement (D1, D2) du filtre antiharmonique (OWF) font partie en même temps du redresseur de secteur (CA/CC).

**8.** Ballast électronique pour au moins une lampe à décharge (LA1), comportant :

- un redresseur de secteur (CA/CC),
- un onduleur (CC/CA),
- un circuit de résonance en série (SRK), formé par le montage en série d'une capacité à résonance (C5) et d'une inductance à résonance (L), et
- un filtre antiharmonique (PVF) comportant des condensateurs de lissage (C6, C7) qui, dans une phase d'une tension de réseau ($\underline{U}_{Réseau}$) redressée, sont chargés en série et, dans une autre phase, sont déchargés en parallèle en direction de l'onduleur (CC/CA),

**caractérisé par**
une pompe de charge, par l'intermédiaire de laquelle une partie de l'énergie acheminée vers la lampe est renvoyée vers les condensateurs de lissage (C6, C7) du filtre antiharmonique (PVF) et/ou vers d'autres condensateurs ($C_{F1}$, $C_{F2}$, C2, C8),
la pompe de charge étant alimentée par le courant de la lampe et étant déconnectée ou se déconnectant automatiquement en cas de panne du courant de la lampe.

**9.** Ballast selon la revendication 8, **caractérisé en ce que** la pompe de charge comporte un élément (Tr2) pour le découplage par séparation galvanique du courant de la lampe vers l'alimentation en énergie des condensateurs de lissage (C6, C7) ou des autres condensateurs ($C_{F1}$, $C_{F2}$, C2, C8).

**10.** Ballast selon la revendication 9, **caractérisé en ce que** l'élément de découplage est formé par un transformateur (Tr2) dont l'enroulement primaire (N1) est monté en série avec la lampe (LA1).

**11.** Ballast selon l'une quelconque des revendications 8 à 10, **caractérisé en ce que** les deux condensateurs de lissage (C6, C7) du filtre antiharmonique (PVF) sont montés dans deux branches parallèles d'un circuit « passive valley fill », qui sont reliées entre elles par une branche de pontage.

**12.** Ballast selon la revendication 11, **caractérisé en ce que** l'énergie de la pompe de charge est acheminée vers un point de liaison de deux diodes (D1, D2) agencées dans la branche de pontage.

**13.** Ballast selon les revendications 9 et 12, **caractérisé en ce qu'**au point de liaison de la branche de pontage est raccordé un condensateur de pompage (C2), qui est relié avec son autre raccord à un enroulement secondaire (N2) du transformateur (Tr2).

**14.** Ballast selon la revendication 13, **caractérisé en ce que** le condensateur de pompage (C2) est relié avec son autre raccord, en outre, à une prise centrale de deux condensateurs de filtrage ($C_{F1}$, $C_{F2}$) montés en amont du redresseur de secteur (CA/CC).

**15.** Ballast selon la revendication 11, **caractérisé en ce que** l'énergie de la pompe de charge est acheminée vers un condensateur de pompage (C2) qui est monté en parallèle aux deux branches parallèles du circuit « passive valley fill ».

**16.** Procédé de fonctionnement d'au moins une lampe (LA1), comportant :

- un redresseur de secteur (CA/CC),
- un onduleur (CC/CA),
- un circuit de résonance en série (SRK), formé par le montage en série d'une capacité à résonance (C4) et d'une inductance à résonance (L), et
- un filtre antiharmonique (OWF) qui comporte un montage en série de deux diodes de redressement (D1, D2), qui sont raccordées en sens direct au redresseur de secteur (CA/CC), et un condensateur de pompage (C2), qui est relié à la prise centrale des deux diodes de redressement (D1, D2),

**caractérisé en ce que**

l'énergie pour le condensateur de pompage (C2) est fournie par un découplage par séparation galvanique du courant ($I_{LA}$) circulant à travers la lampe (LA1),

le condensateur de pompage (C2) étant déconnecté ou se déconnectant automatiquement en cas de panne du courant de la lampe.

17. Procédé selon la revendication 16, **caractérisé en ce que** le découplage est choisi de telle sorte que le condensateur de pompage (C2) est chargé dans la phase pendant laquelle l'onduleur (CC/CA) reçoit de l'énergie.

18. Procédé selon la revendication 16 ou 17, **caractérisé en ce que** l'énergie pour le condensateur de pompage (C2) est découplée de manière inductive (Tr2).

19. Procédé selon la revendication 18, **caractérisé en ce que** la tension maximale sur l'onduleur (CC/CA) est définie par la zone de saturation du couplage inductif (Tr2).

20. Procédé selon l'une quelconque des revendications 16 à 19, **caractérisé en ce qu'**au moins deux lampes (LA1, L12) montées en série sont utilisées.

21. Procédé de fonctionnement d'au moins une lampe (LA1), comportant :

    - un redresseur de secteur (CA/CC),
    - un onduleur (CC/CA),
    - un circuit de résonance en série (SRK), formé par le montage en série d'une capacité à résonance (C4) et d'une inductance à résonance (L), et
    - un filtre antiharmonique (PVF) comportant des condensateurs de lissage (C6, C7) qui, dans une phase d'une tension de réseau ($U_{Réseau}$) redressée, sont chargés en série et, dans une autre phase, sont déchargées en parallèle en direction de l'onduleur (CC/CA),

**caractérisé par**

une pompe de charge, dont l'énergie acheminée vers les condensateurs de lissage (C6, C7) du filtre antiharmonique (PVF) et/ou vers d'autres condensateurs ($C_{F1}$, $C_{F2}$, C2, C8), est fournie par le découplage du courant ($I_{LA}$) circulant à travers la lampe (LA1), la pompe de charge étant déconnectée ou se déconnectant automatiquement en cas de panne du courant de la lampe.

DC-Eingang

100a

Schalterstellung 1-1' : Laden des Pumpenkondensators C1

Schalterstellung 2-2' : Ladungsverschiebung der auf der negativ geladenen
Platte von C1 befindlichen Landungsträger zum
Kondensator C2

Fig. 1a

Fig. 1b

Fig. 1c

DC-Eingang

DC-Ausgang

$\underline{I}_e$

$\underline{I}_a$

$\underline{U}_0$  G

$R_i$

$\underline{U}_e$

S1

G1  T1

D1

D1

C$_1$

$\underline{I}_{C1}$

$\underline{U}_{C1}$

D2

G2  T2

S2

$\underline{U}_{st}$

D2

C$_2$

$\underline{U}_a$  $\underline{Z}_L$

100c

EP 1 514 456 B1

EP 1 514 456 B1

AC-Eingang

DC-Ausgang

Fig. 2

Fig. 3a

EP 1 514 456 B1

Fig. 3b

Fig. 4

EP 1 514 456 B1

Fig. 5a

Fig. 5b

EP 1 514 456 B1

Fig. 6a

Fig. 6b

700a

Fig. 7a

700b

Fig. 7b